# EUROPEAN PATENT APPLICATION

(11) **EP 4 679 721 A2**
(43) Date of publication of application: **14.01.2026**
(21) Application number: 24826084.6
(22) Date of filing: 04.04.2024
(51) Int. Cl.: H04B 7/024, H04W 28/02, H04W 74/00, H04L 47/2441, H04W 84/12

(54) **METHOD AND ELECTRONIC DEVICE FOR MULTI-AP COORDINATION BASED ON INFORMATION ON SERVICE**

(30) Priority: 23.06.2023 KR 20230080873; 04.07.2023 KR 20230086728
(71) Applicant: Samsung Electronics Co., Ltd, Suwon-si, Gyeonggi-do 16677 (KR)
(72) Inventor: CHOI, Junsu, Suwon-si Gyeonggi-do 16677 (KR); CHOI, Hyeonu, Suwon-si Gyeonggi-do 16677 (KR)
(74) Representative: Gulde & Partner
(86) International application number: PCT/KR2024/004423
(87) International publication number: WO 2024/262760

(57) **Abstract**

The method of operating an electronic device can include identifying a service through the electronic device. The method can include negotiating multi-AP coordination for the service. The method can include receiving traffic of the service through the multi-AP coordination.

## Description

### BACKGROUND

### Field

The following description relates to methods and electronic devices for multi-access point (AP) coordination based on information on a service.

### Description of Related Art

Wireless fidelity (Wi-Fi) has grown in popularity over the last decade with the emergence of mobile devices, such as laptops, smartphones, and tablets. As the use of Wi-Fi spreads, demand for faster wireless networks has increased and accordingly, Wi-Fi has continued to develop over the years. A recent Wi-Fi technology that is standardized and commercialized corresponds to Wi-Fi 6, and the standardization of Wi-Fi 7, which is the next-generation technical standard, is in progress by a task group.

A discussion regarding the standard for next generation Wi-Fi after Wi-Fi 7 started in early 2023, and a discussion on a feature to be applied to the standard has been conducted by a study group phase, which is a phase before the task group phase where the actual standard specification is determined. Various techniques have been discussed as candidates and multi-access point (AP) coordination is one of the major techniques having a high possibility of being included in the standard specification. In the case of multi-AP coordination, an electronic device may perform data transmission and reception with a plurality of APs.

### SUMMARY

In one general aspect, an electronic device can include at least one wireless communication circuit configured to transmit and receive a wireless signal, at least one processor operatively connected with the wireless communication circuit, and at least one memory configured to store instructions. The instructions may be executed individually or collectively by the processor to cause the electronic device to transmit a request frame requesting multi-AP coordination for a service provided to a user through the electronic device to an access point (AP) associated with the electronic device,. The instructions may be executed individually or collectively by the processor to cause the electronic device to receive a response frame to the request frame through the AP. The instructions may be executed individually or collectively by the processor to cause the electronic device to communicate service traffic through the multi-AP coordination.

In another general aspect, an electronic device can include at least one wireless communication circuit configured to transmit and receive a wireless signal, at least one processor operatively connected with the wireless communication circuit, and at least one memory configured to store instructions. The instructions may be executed individually or collectively by the processor to cause the electronic device to transmit a request frame requesting multi-AP coordination including traffic flow information of a service to an AP associated with the electronic device,. The instructions may be executed individually or collectively by the processor to cause the electronic device to receive a response frame to the request frame through the AP. The instructions may be executed individually or collectively by the processor to cause the electronic device to receive traffic of the service through the multi-AP coordination.

In another general aspect, a method of operating an electronic device can include identifying a service through the electronic device. The method can include negotiating multi-AP coordination for the service. The method can include receiving traffic of the service through the multi-AP coordination.

### BRIEF DESCRIPTION OF THE DRAWINGS

FIG. 1 illustrates an example of a wireless local area network (WLAN) system according to one embodiment.
FIG. 2 illustrates an example of a WLAN system according to one embodiment.
FIG. 3 illustrates an example of a link setup operation according to one embodiment.
FIG. 4 illustrates an example of multi-access point (AP) coordination according to one embodiment.
FIGS. 5A and 5B illustrate an example of operation modes for multi-AP coordination according to one embodiment.
FIG. 6 illustrates an example of negotiation for multi-AP coordination according to one embodiment.
FIG. 7A illustrates an example of a negotiation process for multi-AP coordination according to one embodiment and FIG. 7B illustrates an example of a format of a request frame requesting multi-AP coordination according to one embodiment.
FIGS. 8A to 8D illustrate examples of elements for specifying information about a service according to one embodiment.
FIG. 9 illustrates an example of information about an AP included in a request frame requesting multi-AP coordination according to one embodiment.
FIG. 10 is a block diagram of an electronic device in a network environment according to one embodiment.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted.

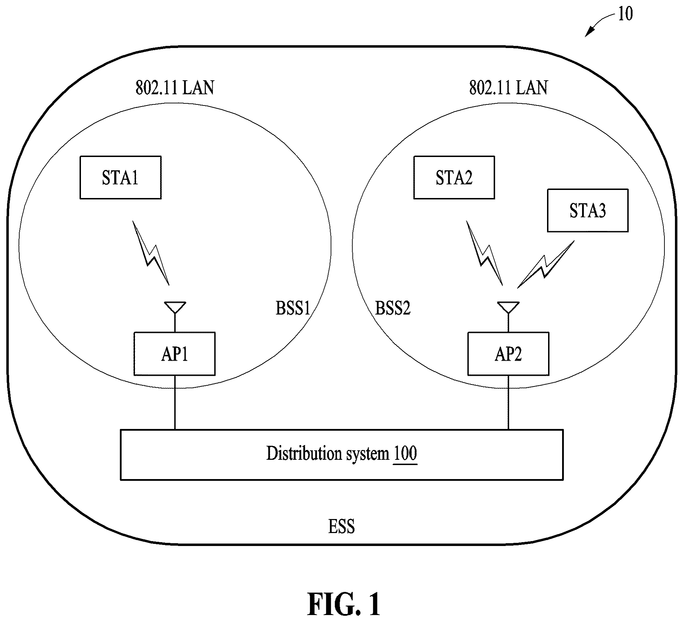

FIG. 1 illustrates an example of a wireless local area network (WLAN) system according to one embodiment.

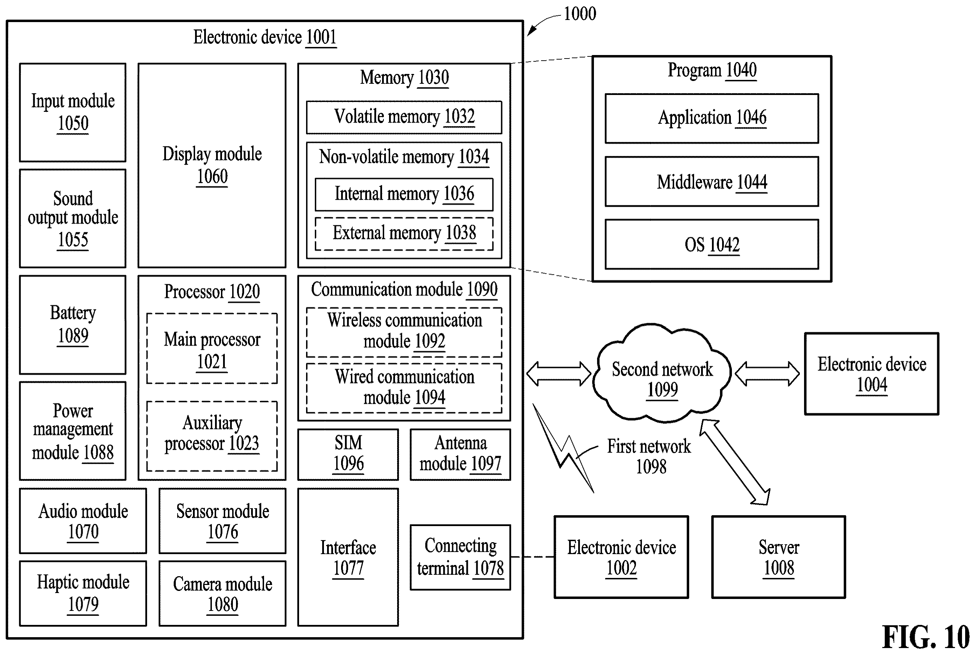

Referring to FIG. 1, according to one embodiment, a WLAN system 10 may be utilized in an infrastructure mode in which an access point (AP) is present in a WLAN structure conforming to an Institute of Electrical and Electronic Engineers (IEEE) 802.11 standard. The WLAN system 10 may include at least one basic service set (BSS), for example, BSS1 and BSS2. The BSS1 and/or BSS2 may be a set of an AP and a station (STA) (e.g., an electronic device 1001, 1002, or 1004 of FIG. 10), which may successfully synchronize with each other to communicate with each other. The BSS1 may include AP1 and STA1, and the BSS2 may include AP2, STA2, and STA3.

According to one embodiment, the WLAN system 10 may include at least one STA (e.g., STA1 to STA3), a plurality of APs (e.g., AP1 and AP2) providing a distribution service, and a distribution system 100 configured to connect the plurality of APs (e.g., AP1 and AP2). The distribution system 100 may implement an extended service set (ESS) by connecting a plurality of BSSs (e.g., BSS1 and BSS2). The ESS may be used as a term to denote one network including the plurality of APs (e.g., AP1 and AP2) connected via the distribution system 100. The plurality of APs (e.g., AP1 and AP2) included in one ESS may have the same service set identification (SSID).

According to one embodiment, the STAs (e.g., STA1 to STA3) may include a medium access control (MAC) and a wireless-medium physical layer interface conforming to the IEEE 802.11 standard. The term "STA" (e.g., STA1 to STA3) may be used to collectively refer to both an AP and a non-AP STA. The STA (e.g., STA1 to STA3) may also be referred to by various terms, such as an "electronic device", a "mobile terminal", a "wireless device", a "wireless transmit/receive unit (WTRU)", a "user equipment (UE)", a "mobile station (MS)", and a "mobile subscriber unit", or may simply be referred to as a "user".

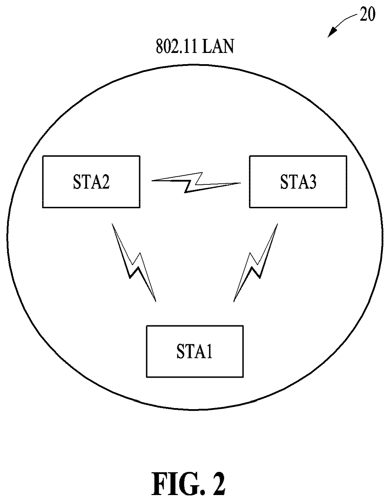

FIG. 2 illustrates an example of a WLAN system according to one embodiment.

Referring to FIG. 2, according to one embodiment, unlike the WLAN system 10 of FIG. 1, a WLAN system 20 may be in an ad-hoc mode in which communication is performed by setting a network among a plurality of STAs, for example, STA1 to STA3 without an AP in a WLAN structure of the IEEE 802. 11 standard. The WLAN system 20 may include a BSS operating in an ad-hoc mode, that is, an independent basic service set (IBSS).

According to one embodiment, since the IBSS does not include an AP, there may not be a centralized management entity that performs a management function at a center. In the IBSS, STAs may be managed in a distributed manner. In the IBSS, all STAs may be mobile STAs, and a self-contained network may be configured since access to a distribution system is not allowed.

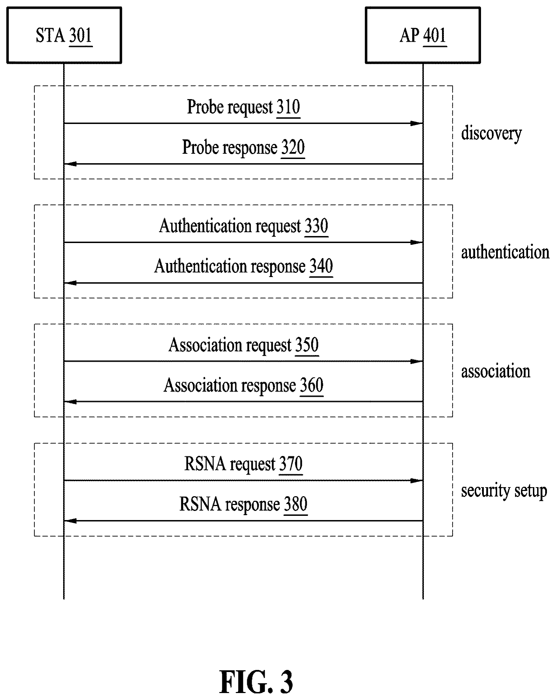

FIG. 3 illustrates an example of a link setup operation according to one embodiment.

Referring to FIG. 3, according to one embodiment, a link setup operation may be performed between devices (e.g., an STA 301 and an AP 401) to communicate with each other. For link setup, operations of discovering a network, performing authentication, establishing association, and setting a security may be performed. The link setup operation may also be referred to as a "session initiation operation" or a "session setup operation". In addition, discovery, authentication, association, and security setup operations in the link setup operation may be collectively referred to as an "association operation."

According to one embodiment, a network discovery operation may include operations 310 and 320. In operation 310, the STA 301 (e.g., the electronic device 1001, the electronic device 1002, or the electronic device 1004 of FIG. 10) may transmit a probe request frame to probe which AP exists and may wait for a response to the probe request frame. The STA 301 may find a network to participate in by performing a scanning operation to access the network. The probe request frame may include information regarding the STA 301 (e.g., a device name and/or an address of the STA301). In some embodiments, the scanning operation in operation 310 may be an active scanning operation. In operation 320, the AP 401 may transmit, to the STA 301 that transmits the probe request frame, a probe response frame in response to the probe request frame. The probe response frame may include information on the AP 401 (e.g., a device name and/or network information of the AP 401). Although FIG. 3 illustrates that the network discovery operation can be performed through active scanning, the example is not limited thereto and when the STA 301 performs passive scanning, the network discovery operation may omit an operation of transmitting a probe request frame. The STA 301 performing passive scanning may receive a beacon frame transmitted by the AP 401 and may perform the following subsequent procedures.

According to one embodiment, after the STA 301 discovers a network, an authentication operation including operations 330 and 340 may be performed. In operation 330, the STA 301 may transmit an authentication request frame to the AP 401. In operation 340, the AP 401 may determine whether to allow authentication for the STA 301, based on information included in the authentication request frame. The AP 401 may provide the STA 301 with a result of an authentication process through an authentication response frame. An authentication frame used for authentication request/response may correspond to a management frame.

According to one embodiment, the authentication frame may include information on one or more of an authentication algorithm number, an authentication transaction sequence number, a status code, challenge text, a robust security network (RSN), a finite cyclic group, and the like.

According to one embodiment, after the STA 301 has successfully authenticated, an association operation including operations 350 and 360 may be performed. In operation 350, the STA 301 may transmit an association request frame to the AP 401. In operation 360, the AP 401 may transmit an association response frame to the STA 301 in response to the association request frame.

According to one embodiment, the association request frame and/or the association response frame may include information related to various capabilities. For example, the association request frame may include information related to various capabilities, such as a beacon listen interval, an SSID, a supported rate, a supported channel, an RSN, a mobility domain, a supported operating class, a traffic indication map (TIM) broadcast request, and/or information related to an interworking service capability. For example, the association response frame may include information related to various capabilities, such as a status code, an association ID (AID), a supported rate, an enhanced distributed channel access (EDCA) parameter set, a received channel power indicator (RCPI), a received signal to noise indicator (RSNI), a mobility domain, a timeout interval (e.g., an association comeback time), an overlapping BSS scan parameter, a TIM broadcast response, and/or information, such as a Quality of Service (QoS) map.

According to one embodiment, after the STA 301 has successfully associated with the network, a security setup operation including operations 370 and 380 may be performed. The security setup operation may be performed using a robust security network association (RSNA) request/response. For example, the security setup operation may include a private key setup operation through four-way handshaking using an extensible authentication protocol over LAN (EAPOL) frame. The security setup operation may be performed by a security scheme that is not defined in the IEEE 802.11 standard.

According to one embodiment, a security session may be set between the STA 301 and the AP 401 based on the security setup operation and the STA 301 and the AP 401 may perform secure data communication.

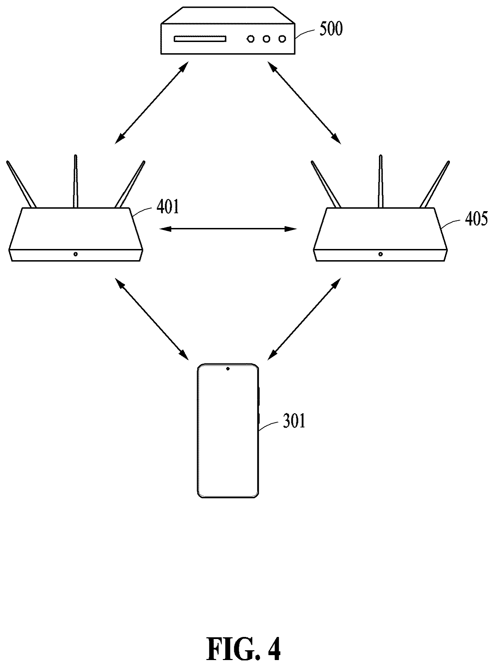

FIG. 4 illustrates an example of multi-AP coordination according to one embodiment.

Referring to FIG. 4, a WLAN system 30 (e.g., the WLAN system 10 of FIG. 1 or the WLAN system 20 of FIG. 2) may include at least one STA (e.g., the STA 301), a plurality of APs (e.g., the AP 401 and an AP 405), and an AP controller 500. In the WLAN system 30, multi-AP coordination (or multi-AP adjustment) may be performed. The multi-AP coordination may be a method of transmitting a signal to an STA (e.g., the STA 301) using the plurality of APs (e.g., the APs 401 and 405). For example, the STA 301 may perform data transmission and reception with the AP 401 and the AP 405 while being connected to the AP 401. In the multi-AP coordination, a signal from the AP 405 may be a desired signal rather than interference for the STA 301 connected to the AP 401. The multi-AP coordination may include a transmission method, such as distributed multiple-input multiple-output (MIMO), coded orthogonal frequency-division multiple access (C-OFDMA), coordinated beamforming, and/or coordinated spatial reuse. FIG. 4 illustrates that two APs, which are the AP 401 and the AP 405, are used for the multi-AP coordination. However, the example is not limited thereto and the number of APs in the multi-AP coordination may be more than three according to one embodiment. The multi-AP coordination may not be limited to the structure shown in FIG. 4 and may be performed in various forms.

According to one embodiment, when transmitting and receiving data between an STA (e.g., the STA 301) and an AP (e.g., the AP 401 and the AP 405), a multi-AP coordination method may minimize the interference between BSSs during data transmission and reception by sharing information (e.g., link information, channel feedback information, and scheduling information) on the STA required for the multi-AP coordination between the APs (e.g., the AP 401 and the AP 405) or may increase the data transmission efficiency by causing two or more APs (e.g., the AP 401 and the AP 405) to participate in data transmission and reception with the STA (e.g., the STA 301) at a specific time point. A multi-AP coordination environment may need to be created to coordinate a plurality of APs (e.g., the AP 401 and the AP 405) to transmit data simultaneously using the plurality of APs (e.g., the AP 401 and the AP 405) in the WLAN system 30. A link may need to be established between the APs (e.g., the AP 401 and the AP 405) to coordinate the APs and information required for the multi-AP coordination, such as information (e.g., link information, channel feedback information, and scheduling information) about an STA (e.g., the STA 301) associated to the respective AP (e.g., the AP 401 and the AP 405), may need to be shared.

According to one embodiment, the AP controller 500 may manage and control (or coordinate) the plurality of APs (e.g., the AP 401 and the AP 405) in the WLAN system 30. The AP controller 500 may manage information on a BSS constituted by each of the plurality of APs (e.g., the AP 401 and the AP 405) and/or information on an STA associated to the BSS.

According to one embodiment, the AP controller 500 may initiate and control the multi-AP coordination. For example, the AP controller 500 may group or select APs (e.g., the AP 401 and the AP 405) performing the multi-AP coordination with the STA 301 and may manage a link with the APs (e.g., the AP 401 and the AP 405) performing the multi-AP coordination to share information with the APs (e.g., the AP 401 and the AP 405) performing the multi-AP coordination.

According to one embodiment, the AP (e.g., the AP 401 or the AP 405) may perform the same function as an AP that is able to form a BSS in the WLAN system 30, may be coordinated by the AP controller 500, and may participate in the multi-AP coordination. For example, the AP (e.g., the AP 401 or the AP 405) may associate with the AP controller 500 and may mutually share information (e.g., control information, management information, and data traffic) with the AP controller 500.

According to one embodiment, the STA 301 may be associated with one of the APs (e.g., the AP 401 and the AP 405) participating in the multi-AP coordination. In the multi-AP coordination, the AP (e.g., the AP 401 or the AP 405) may be allowed for direct transmission and reception with the AP controller 500 and the STA 301 may be allowed for direct transmission and reception with the APs (e.g., the AP 401 and the AP 405) participating in the multi-AP coordination. Although FIG. 4 illustrates that direct transmission and reception between the AP controller 500 and the STA 301 is unavailable, the AP controller 500 may recognize the existence of the STA 301. According to one embodiment, the AP controller 500 and the STA 301 may be allowed for direct transmission and reception with each other.

According to one embodiment, the AP controller 500 may be referred to as a master AP or a sharing AP, and an AP (e.g., the AP 401 or the AP 405) that is able to participate in the multi-AP coordination may be referred to as a slave AP or a shared AP. The AP controller 500 and the AP (e.g., the AP 401 or the AP 405) that is able to participate in the multi-AP coordination may be replaced with various expressions.

According to one embodiment, the multi-AP coordination may benefit user experience at least because the multi-AP coordination is able to constantly maintain inconsistent latency due to interference or fading. In a non-real-time service use condition, it may be difficult for a user to experience the benefit of the multi-AP coordination. However, in a real-time service use condition, a user may obtain significant improvement in user experience due to the multi-AP coordination. The real-time service may be a latency-sensitive service (e.g., an online game, audio, or a video call service) and the non-real time service may be a latency-insensitive service (or a non-latency demanding service) (e.g., a web browser or a file downloading service).

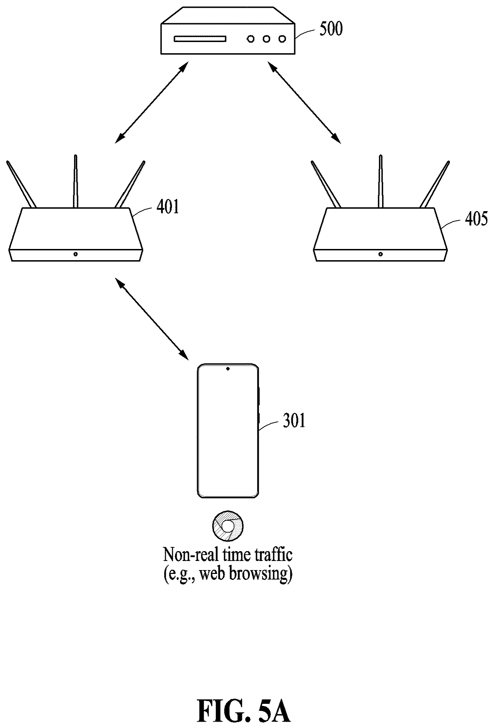

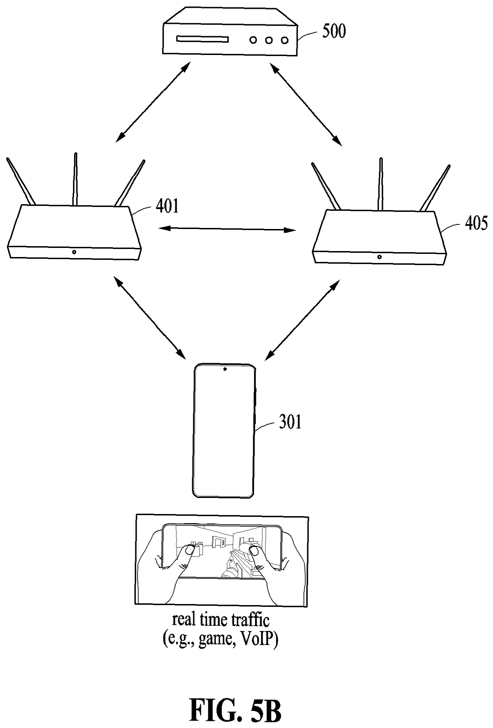

FIGS. 5A and 5B illustrate an example of operation modes for multi-AP coordination according to one embodiment.

Referring to FIGS. 5A and 5B, according to one embodiment, the STA301 may operate in a normal operation mode or a multi-AP coordination operation mode. The normal operation mode may be an operation mode in which the STA 301 performs data transmission and reception via an associated AP (e.g., the AP 401) and the multi-AP coordination operation mode may be an operation mode in which the STA 301 performs data transmission and reception through multi-AP coordination. FIG. 5A illustrates an example of the normal operation mode and FIG. 5B illustrates an example of the multi-AP coordination operation mode.

According to one embodiment, the STA 301 may operate in the normal operation mode, or the multi-AP coordination operation mode, depending on a service type. For example, when a service type is a real-time service, the STA 301 may determine to operate in the multi-AP coordination operation mode. Conversely, when the service type is a non-real time service, the STA 301 may determine to operate in the normal operation mode. According to one embodiment, the STA 301 may operate in the multi-AP coordination operation mode with respect to at least one service provided to a user regardless of the service type.

According to one embodiment, the STA 301 may negotiate with the AP controller 500 for the multi-AP coordination for a service in the multi-AP coordination operation mode. In a negotiation process for the multi-AP coordination with the AP controller 500, the STA 301 may use information (e.g., information on a traffic flow of a service) about a service requesting the multi-AP coordination. The information on the traffic flow of the service may include Internet protocol (IP) information on traffic generated by the service. The information on the traffic flow of the service may include various types of information for specifying the traffic (or a traffic flow) generated by the service.

According to one embodiment, the STA 301 may selectively perform the multi-AP coordination on one or more designated services. In some embodiments the multi-AP coordination may not be performed on all data traffic of the STA 301 but may be performed on the traffic generated by a service that the STA 301 requests for the multi-AP coordination. By applying the multi-AP coordination only to the traffic that is able to provide differentiated user experience through the multi-AP coordination by the STA 301, the burden of a backhaul link and overhead due to data distribution and management of the AP controller 500 may decrease, and the improvement of the user experience due to the multi-AP coordination may be maintained.

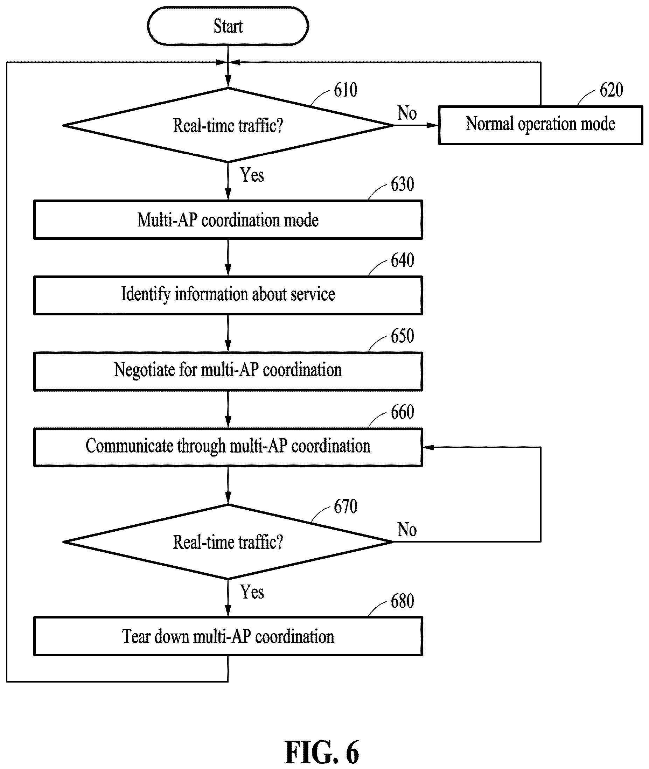

FIG. 6 illustrates an example of negotiation for multi-AP coordination according to one embodiment.

Referring to FIG. 6, operations 610 to 680 may describe operations of initiating, performing, and/or tearing down negotiation for multi-AP coordination. Operations 610 to 680 may be sequentially performed, but it is not required that these operations be performed sequentially. For example, operations 610 to 680 may be performed in different orders, and at least two operations may be performed in parallel.

In operation 610, the STA 301 is in operation by being associated to the AP 401 and may identify (e.g., recognize) whether the traffic of a service executed by the STA 301 is real time traffic. In some embodiments, The STA 301 may further identify a service type (e.g., a real-time service or a non-real time service).

In operation 620, when the traffic of the service executed by the STA 301 is identified as non-real time traffic, the STA 301 may operate in the normal operation mode.

In operation 630, when the traffic of the service executed by the STA 301 is identified as real-time traffic, the STA 301 may operate in the multi-AP coordination operation mode.

In operation 640, the STA 301 may identify information (e.g., IP information of the traffic of the service) on the service requesting the multi-AP coordination.

In operation 650, the STA 301 may negotiate with the AP controller 500 for the multi-AP coordination for the service using the information (e.g., the IP information of the traffic of the service) on the identified service.

In operation 660, after the negotiation for the multi-AP coordination is completed, the STA 301 may communicate with the traffic of the service through the multi-AP coordination. For example, the STA 301 may transmit or receive the traffic generated by the service through the plurality of APs (e.g., the AP 401 and the AP 405).

In operation 670, the STA 301 may determine (e.g., detect) whether the traffic generated by the service requesting the multi-AP coordination has stopped during the multi-AP coordination operation.

In operation 680, when there is no traffic generated by the service requesting the multi-AP coordination, the STA 301 may no longer use the multi-AP coordination (e.g., TWT tear down).

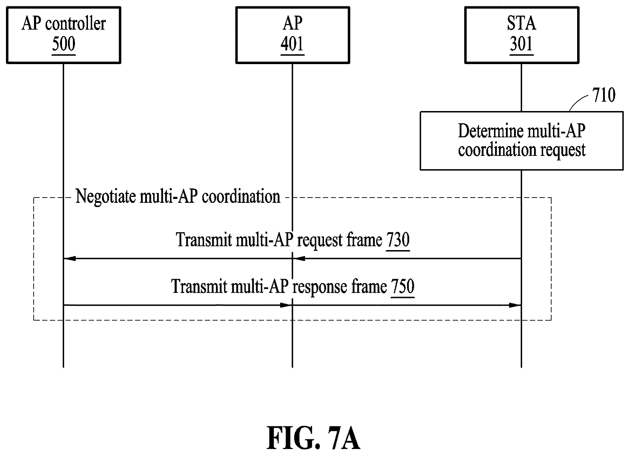

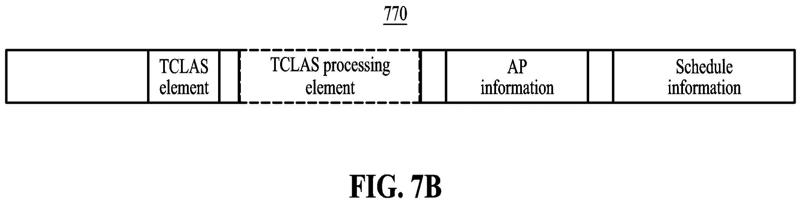

FIG. 7A illustrates an example of a negotiation process for multi-AP coordination according to one embodiment and FIG. 7B illustrates an example of a format of a request frame requesting multi-AP coordination according to one embodiment.

Referring to FIGS. 7A and 7B, operations 710 to 750 may describe a negotiation process for multi-AP coordination. Operations 710 to 750 may be sequentially performed, but these operations are not required to be performed sequentially. For example, operations 710 to 750 may be performed in different orders, and at least two operations may be performed in parallel.

In operation 710, the STA 301 may determine to request multi-AP coordination for a service. In some embodiments, a service type may be a real-time service. Embodiments are not limited to requesting the multi-AP coordination only for the real-time service, and according to one embodiment, the STA 301 may request the multi-AP coordination for one or more services (e.g., a non-real time service and a real-time service) provided to a user regardless of the service type.

In operation 730, the STA 301 may transmit a request frame (e.g., a multi-AP coordination request frame 770 of FIG. 7B) requesting the multi-AP coordination for the service to the AP controller 500 through the associated AP 401. For example, the AP 401 may receive a request frame from the STA 301 and may transmit the request frame to the AP controller 500.

In operation 750, the AP controller 500 may transmit a response frame (e.g., a multi-AP coordination response) to the request frame to the STA 301 through the AP 401. For example, the AP 401 may receive a response frame from the AP controller 500 and may transmit the response frame to the STA 301. The AP controller 500 may accept or reject the multi-AP coordination request based on an available resource. The response frame may include information on the acceptance or rejection of the multi-AP coordination request.

According to one embodiment, a request frame 770 requesting the multi-AP coordination may include a plurality of elements and a plurality of fields. At least one element and/or at least one field in the request frame 770 may include information for the multi-AP coordination (e.g., information on a service, information on an AP, and/or scheduling information for the service).

According to one embodiment, the request frame 770 may include information on the service requesting the multi-AP coordination. The information on the service may be specified in a traffic classification (TCLAS) element, which is one of the plurality of elements in the request frame 770.

According to one embodiment, the request frame 770 may include a plurality of TCLAS elements. In the plurality of TCLAS elements, information on respective services requesting the multi-AP coordination may be specified. In some embodiments, the request frame 770 may further include a TCLAS processing element.

According to one embodiment, the request frame 770 may further include information (or a list) (e.g., a basic service set identifier (BSSID) or basic service set (BSS) color information) about an AP (e.g., at least one AP desired by the STA 301 to participate in the multi-AP coordination) located adjacent to the STA 301. When the multi-AP coordination request is accepted, at least one AP included in the information about the AP may participate in the multi-AP coordination or may not participate in the multi-AP coordination. According to one embodiment, all APs included in the information about the AP may participate in the multi-AP coordination. According to one embodiment, the multi-AP coordination participation of the AP included in the information about the AP may be determined based on control (e.g., selection) of the AP controller 500.

According to one embodiment, the request frame 770 may further include scheduling information (e.g., a service interval and a service duration) for the service. When the multi-AP coordination request is accepted, the AP controller 500 may perform the multi-AP coordination operation on the STA 301 based on the scheduling information for the service specified in the request frame 770. Through this, the desired quality for the service (e.g., whether the service is real time or a specific latency) may be further guaranteed.

According to one embodiment, when the multi-AP coordination request is accepted, the AP controller 500 may perform the multi-AP coordination operation on the STA 301 based on the information about the service specified in the TCLAS element in the request frame 770. The STA 301 may communicate the traffic of the service through the multi-AP coordination.

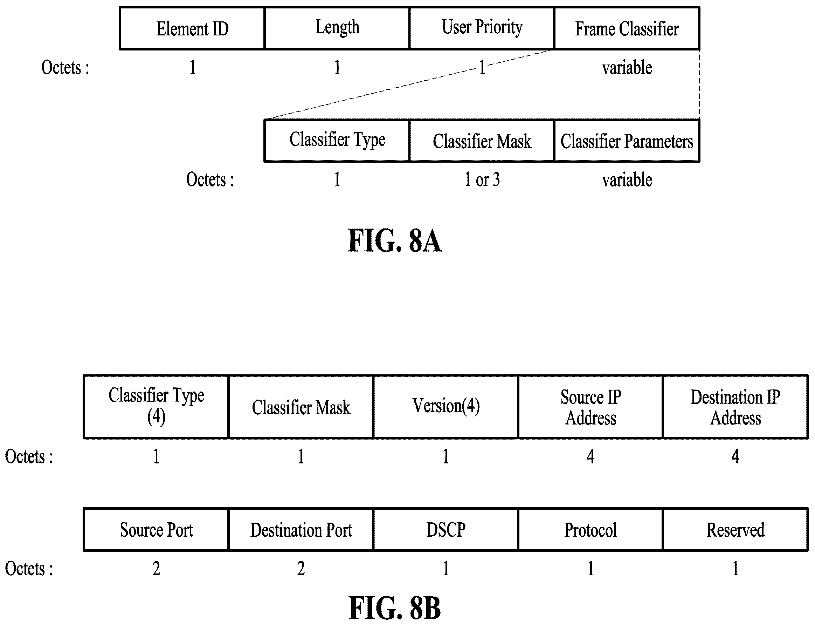

FIGS. 8A to 8D illustrate examples of elements for specifying information about a service according to one embodiment.

FIG. 8A illustrates a format of a TCLAS element defined in IEEE 802.11. According to one embodiment, the TCLAS element may be used to select a traffic flow for a service requesting multi-AP coordination. At least one parameter (e.g., an IP parameter) may be determined to specify a specific traffic flow. In the TCLAS element, the parameter specifying the traffic flow may be variously used.

According to one embodiment, the TCLAS element may include an element ID field (e.g., Element ID), a length field (e.g., Length), a user priority field (e.g., User Priority), and a frame classifier field (e.g., Frame Classifier). The element ID field may indicate a type of an element and in some embodiments, may be used to indicate the TCLAS element. The length field may indicate a length of the TCLAS element. The user priority field may indicate a user priority from the top hierarchy. The frame classifier field may indicate a method used for classifying frames from the top hierarchy.

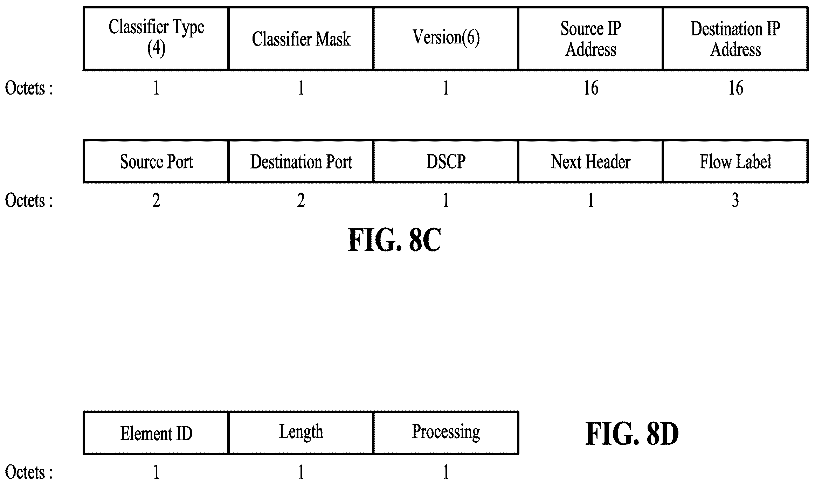

FIG.8A illustrates an example in which the frame classifier field includes a classifier type field (or a classifier type sub-field) (e.g., Classifier Type), a classifier mask field (or a classifier mask sub-field) (e.g., Classifier Mask), and a classifier parameter field (or a classifier parameter sub-field) (e.g., Classifier Parameters). According to one embodiment, a classifier type in the frame classifier field may be appropriately used to specify the traffic of the service requesting the multi-AP coordination. Table 1 shows an example of a classifier type and a parameter for classification. Table 1 may represent that the frame classifier field may be interpreted in various formats (e.g., the frame classifier field of FIG. 8B and the frame classifier field of FIG. 8C) depending on the classifier type (e.g., a value for classifying the classifier type).

**Table 1**

| **Classifier type** | **Classifier parameters** |
|---|---|
| 0 | Ethernet parameters |
| 1 | TCP/UDP IP parameters |
| 2 | IEEE 802.1Q parameters |
| 3 | Filter Offset parameters |
| 4 | IP and higher layer parameters |
| 5 | IEEE 802.1D/Q parameters |
| 6 | IEEE 802.11 MAC header parameters |
| 7 | IEEE Std 802.11 downlink PV1 MPDU MAC header parameters ( From DS field of the Frame Control field equal to 1) |
| 8 | IEEE Std 802.11 nondownlink PV1 MPDU MAC header parameter s (From DS field of the Frame Control field equal to 0) |
| 9 | IEEE Std 802.11 PV1 MPDU Full Address MAC header paramete rs |
| 10 | IP extensions and higher layer parameters |
| 11-255 | Reserved |

According to one embodiment, classifier types 0 to 10 may be used to specify traffic of a service that requests multi-AP coordination. For example, when the classifier type is 4, IP parameters (or top hierarchy parameters) (e.g., a parameter, such as a source IP address, a destination IP address, a source port, a destination port, a differentiated services code point (DSCP), and a protocol) may be set and a traffic flow may be specified based on IP information. FIGS. 8B and 8C may respectively represent structures of IPV4 and IPV6 frame classifier fields based on version fields when the classifier type is 4.

According to one embodiment, classifier types 11 to 255 may be used to specify traffic of a service that requests multi-AP coordination. For example, a new structure of the frame classifier field may be defined by setting the classifier type for specifying the traffic of the service requesting multi-AP coordination from classifier types 11 to 255 and adding information for specifying the traffic of the service to one or more parameters to be set.

FIG. 8D shows a TCLAS processing element defined by IEEE 802.11. According to one embodiment, when a plurality of TCLAS elements is included in the request frame 770, the request frame 770 may further include a TCLAS processing element. To identify traffic of a service requesting multi-AP coordination using a plurality of TCLAS elements, the TCLAS processing element may be used to define a condition, such as whether to satisfy all or one of the conditions of the plurality of TCLAS elements. The TCLAS processing element may include an element ID field (e.g., Element ID), a length field (e.g., Length), and a processing field (e.g., Processing). The element ID field may indicate a type of an element and in some embodiments, may indicate a TCLAS processing element. The length field may indicate a length of the TCLAS processing element. The processing field may represent a method of classifying traffic from the top hierarchy when a plurality of TCLAS elements exists, and Table 2 may show meaning related to classification depending on a processing field (or a processing sub-field) value. The processing field values 3 to 255 may be used to add meaning related to classification and one or more additional processing values.

**Table 2**

| **Processing subfield value** | **Meaning** |
|---|---|
| 0 | PDU contents or MSDU parameters have to match to t he parameters in all of the associated TCLAS elements. |
| 1 | PDU contents or MSDU parameters have to match to a t least one of the associated TCLAS elements |
| 2 | PDUs or MSDUs that do not belong to any other TS are classified to the TS for which this TCLAS Processi |
| | ng element is used. In this case, there are no associated TCLAS elements |
| 3-255 | Reserved |

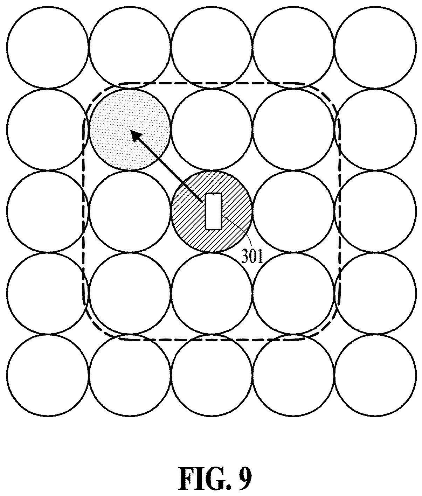

FIG. 9 illustrates an example of information about an AP included in a request frame requesting multi-AP coordination according to one embodiment. In FIG. 9, a circle may be a cell.

Referring to FIG. 9, according to one embodiment, peripheral APs from which a signal does not reach the STA 301 may not benefit multi-AP coordination. For the STA 301, the AP controller 500 may set APs around a currently connected AP (e.g., the AP 401) to be APs performing multi-AP coordination based on floor plan information on an installed (or established) AP. When the STA 301 moves (or has mobility) and information for peripheral APs to participate in the multi-AP coordination is given, overhead involved in the multi-AP coordination may be more mitigated.

According to one embodiment, the STA 301 may additionally specify, in the request frame 770, information about which peripheral APs will perform multi-AP coordination when requesting the multi-AP coordination. The multi-AP coordination may be requested by including information (or a list) (e.g., a BSSID or BSS color information) about an AP (e.g., at least one AP that the STA 301 desires to participate in multi-AP coordination) around the STA 301 in the request frame 770.

FIG. 10 is a block diagram illustrating an electronic device 1001 in a network environment 1000 according to various embodiments. Referring to FIG. 10, the electronic device 1001 in the network environment 1000 may communicate with an electronic device 1002 via a first network 1098 (e.g., a short-range wireless communication network), or communicate with at least one of an electronic device 1004 or a server 1008 via a second network 1099 (e.g., a long-range wireless communication network). According to one embodiment, the electronic device 1001 may communicate with the electronic device 1004 via the server 1008. According to one embodiment, the electronic device 1001 may include a processor 1020, a memory 1030, an input module 1050, a sound output module 1055, a display module 1060, an audio module 1070, and a sensor module 1076, an interface 1077, a connecting terminal 1078, a haptic module 1079, a camera module 1080, a power management module 1088, a battery 1089, a communication module 1090, a subscriber identification module (SIM) 1096, and/or an antenna module 1097. In one embodiment, at least one (e.g., the connecting terminal 1078) of the above components may be omitted from the electronic device 1001, or one or more other components may be added in the electronic device 1001. In one embodiment, some (e.g., the sensor module 1076, the camera module 1080, or the antenna module 1097) of the components may be integrated as a single component (e.g., the display module 1060).

The processor 1020 may execute, for example, software (e.g., a program 1040) to control at least one other component (e.g., a hardware or software component) of the electronic device 1001 connected to the processor 1020, and may perform various data processing or computation. According to one embodiment, as at least a part of data processing or computation, the processor 1020 may store a command or data received from another component (e.g., the sensor module 1076 or the communication module 1090) in a volatile memory 1032, process the command or the data stored in the volatile memory 1032, and store resulting data in a nonvolatile memory 1034. According to one embodiment, the processor 1020 may include a main processor 1021 (e.g., a central processing unit (CPU) or an application processor) and/or an auxiliary processor 1023 (e.g., a graphics processing unit (GPU), a neural processing unit (NPU), an image signal processor (ISP), a sensor hub processor, or a communication processor (CP)) that is operable independently of, or in conjunction with the main processor 1021. For example, when the electronic device 1001 includes the main processor 1021 and the auxiliary processor 1023, the auxiliary processor 1023 may be adapted to consume less power than the main processor 1021 or to be specific to a specified function. The auxiliary processor 1023 may be implemented separately from the main processor 1021 or as a part of the main processor 1021.

The auxiliary processor 1023 may control at least some functions or states related to at least one of the components (e.g., the display module 1060, the sensor module 1076, or the communication module 1090) of the electronic device 1001, instead of the main processor 1021 while the main processor 1021 is in an inactive (e.g., sleep) state or along with the main processor 1021 while the main processor 1021 is an active state (e.g., executing an application). According to one embodiment, the auxiliary processor 1023 (e.g., an ISP or a CP) may be implemented as a portion of another component (e.g., the camera module 1080 or the communication module 1090) that is functionally related to the auxiliary processor 1023. According to one embodiment, the auxiliary processor 1023 (e.g., an NPU) may include a hardware structure specified for artificial intelligence model processing. An artificial intelligence model may be generated by machine learning. Such learning may be performed by, for example, the electronic device 1001 in which artificial intelligence is performed, or may be performed via a separate server (e.g., the server 1008). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The artificial intelligence model may additionally or alternatively, include a software structure other than the hardware structure.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the nonvolatile memory 1034.

The program 1040 may be stored as software in the memory 1030, and may include, for example, an operating system (OS) 1042, middleware 1044, or an application 1046.

The input module 1050 may receive a command or data to be used by another component (e.g., the processor 1020) of the electronic device 1001, from the outside (e.g., a user) of the electronic device 1001. The input module 1050 may include, for example, a microphone, a mouse, a keyboard, a key (e.g., a button), or a digital pen (e.g., a stylus pen).

The sound output module 1055 may output a sound signal to the outside of the electronic device 1001. The sound output module 1055 may include, for example, a speaker or a receiver. The speaker may be used for general purposes, such as playing multimedia or playing recordings. The receiver may be used to receive, for example, an incoming call. According to some embodiments, the receiver may be implemented separately from the speaker and in other embodiments, the receiver may be implemented as a part of the speaker.

The display module 1060 may visually provide information to the outside (e.g., a user) of the electronic device 1001 (e.g., a user). The display module 1060 may include, for example, a control circuit for controlling a display, a hologram device, or a projector and control circuitry to control a corresponding one of the display, the hologram device, and the projector. According to one embodiment, the display module 1060 may include a touch sensor adapted to sense a touch, or a pressure sensor adapted to measure an intensity of a force incurred by the touch.

The audio module 1070 may convert a sound into an electric signal or vice versa. According to one embodiment, the audio module 1070 may obtain the sound via the input module 1050 or output the sound via the sound output module 1055 and/or an external electronic device (e.g., the electronic device 1002 such as a speaker or a headphone) directly or wirelessly connected to the electronic device 1001.

The sensor module 1076 may detect an operational state (e.g., power or temperature) of the electronic device 1001 and/or an environmental state (e.g., a state of a user) external to the electronic device 1001, and generate an electric signal or data value corresponding to the detected state. According to one embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., by wire) or wirelessly. According to one embodiment, the interface 1077 may include, for example, a high-definition multimedia interface (HDMI), a universal serial bus (USB) interface, a secure digital (SD) card interface, or an audio interface.

The connecting terminal 1078 may include a connector via which the electronic device 1001 may be physically connected to an external electronic device (e.g., the electronic device 1002). According to one embodiment, the connecting terminal 1078 may include, for example, an HDMI connector, a USB connector, an SD card connector, or an audio connector (e.g., a headphone connector).

The haptic module 1079 may convert an electric signal into a mechanical stimulus (e.g., a vibration or a movement) or an electrical stimulus which may be recognized by a user via his or her tactile sensation or kinesthetic sensation. According to one embodiment, the haptic module 1079 may include, for example, a motor, a piezoelectric element, and/or an electric stimulator.

The camera module 1080 may capture still images and moving images. According to one embodiment, the camera module 1080 may include one or more lenses, image sensors, image signal processors, or flashes.

The power management module 1088 may manage power supplied to the electronic device 1001. According to one embodiment, the power management module 1088 may be implemented as, for example, at least a part of a power management integrated circuit (PMIC).

The battery 1089 may supply power to at least one component of the electronic device 1001. According to one embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently of the processor 1020 (e.g., an application processor) and that support a direct (e.g., wired) communication or a wireless communication. According to one embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module, or a power line communication (PLC) module). A corresponding one of these communication modules may communicate with the external electronic device 1004 via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the SIM 1096.

The wireless communication module 1092 may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module 1092 may support a high-frequency band (e.g., a mmWave band) to achieve, e.g., a high data transmission rate. The wireless communication module 1092 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 1092 may support various requirements specified in the electronic device 1001, an external electronic device (e.g., the electronic device 1004), or a network system (e.g., the second network 1099). According to one embodiment, the wireless communication module 1092 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1097 may transmit or receive a signal or power to or from the outside (e.g., the external electronic device) of the electronic device 1001. According to one embodiment, the antenna module 1097 may include an antenna including a radiating element including a conductive material or a conductive pattern formed in or on a substrate (e.g., a printed circuit board (PCB)). According to one embodiment, the antenna module 1097 may include a plurality of antennas (e.g., array antennas). In such a case, at least one antenna appropriate for a communication scheme used in a communication network, such as the first network 1098 or the second network 1099, may be selected by, for example, the communication module 1090 from the plurality of antennas. The signal or the power may be transmitted or received between the communication module 1090 and the external electronic device via the at least one selected antenna. According to one embodiment, another component (e.g., a radio frequency integrated circuit (RFIC)) other than the radiating element may be additionally formed as a part of the antenna module 1097.

According to various embodiments, the antenna module 1097 may form a mm Wave antenna module. According to one embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to one embodiment, commands or data may be transmitted or received between the electronic device 1001 and the external electronic device 1004 via the server 1008 coupled with a second network 1099. Each of the external electronic devices 1002 and 1004 may be a device of the same type as or a different type from the electronic device 1001. According to one embodiment, all or some of the operations to be executed by the electronic device 1001 may be executed at one or more of the external electronic devices 1002, 1004, or 1008. For example, if the electronic device 1001 needs to perform a function or a service automatically, or in response to a request from a user or another device, the electronic device 1001, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 1001. The electronic device 1001 may provide the outcome, with or without further processing of the outcome, as at least part of a reply to the request. To that end, a cloud computing, distributed computing, mobile edge computing (MEC), or client-server computing technology may be used, for example. The electronic device 1001 may provide ultra-low-latency services using, e.g., distributed computing or mobile edge computing. In one embodiment, the external electronic device 1004 may include an Internet-of-things (IoT) device. The server 1008 may be, for example, an intelligent server using machine learning and/or a neural network. According to one embodiment, the external electronic device 1004 or the server 1008 may be included in the second network 1099. The electronic device 1001 may be applied to intelligent services (e.g., smart home, smart city, smart car, or healthcare) based on 5G communication technology or IoT-related technology.

According to one embodiment, an electronic device (e.g., the STA 301 of FIG. 4 or the electronic device 1001 of FIG. 10) may include at least one wireless communication circuit (e.g., the wireless communication module 1092 of FIG. 10) configured to transmit and receive a wireless signal, at least one processor (e.g., the processor 1020 of FIG. 10) operatively connected to the wireless communication circuit 1092, and at least one memory (e.g., the memory 1030 of FIG. 10) configured to store instructions. The instructions may be executed individually or collectively by the processor 1020 to cause the electronic device 301 or 1001 to transmit, to the AP 401 associated with the electronic device, the request frame 770 requesting multi-AP coordination for a service through the electronic device 301 or 1001. The instructions may be executed individually or collectively by the processor 1020 to cause the electronic device 301 or 1001 to receive the response frame to the request frame 770 through the AP 401. The instructions may be executed individually or collectively by the processor 1020 to cause the electronic device 301 or 1001 to communicate traffic of the service through the multi-AP coordination.

According to one embodiment, the service may be a real-time service.

According to one embodiment, the request frame 770 may include information about the service.

According to one embodiment, the information about the service may include IP information of traffic generated by the service.

According to one embodiment, the information about the service may be specified in a TCLAS element included in the request frame.

According to one embodiment, when a plurality of TCLAS elements is included in the request frame, a TCLAS processing element may be included in the request frame 770.

According to one embodiment, the request frame 770 may include information about an AP around the electronic device 301 or 1001.

According to one embodiment, the information about the AP may include a BSSID or BSS color information.

According to one embodiment, the request frame 770 may include scheduling information for the service.

According to one embodiment, the scheduling information may include a service interval and a duration.

According to one embodiment, an electronic device (e.g., the STA 301 of FIG. 4 or the electronic device 1001 of FIG. 10) may include at least one wireless communication circuit (e.g., the wireless communication module 1092 of FIG. 10) configured to transmit and receive a wireless signal, at least one processor (e.g., the processor 1020 of FIG. 10) operatively connected to the wireless communication circuit 1092, and at least one memory (e.g., the memory 1030 of FIG. 10) configured to store instructions. The instructions may be executed individually or collectively by the processor 1020 to cause the electronic device 301 or 1001 to transmit, to the AP 401 associated with the electronic device 301 or 1001, the request frame 770 requesting multi-AP coordination including traffic flow information of a service. The instructions may be executed individually or collectively by the processor 1020 to cause the electronic device 301 or 1001 to receive the response frame to the request frame 770 through the AP 401. The instructions may be executed individually or collectively by the processor 1020 to cause the electronic device 301 or 1001 to receive traffic of the service through the multi-AP coordination.

According to one embodiment, the service may be a real-time service.

According to one embodiment, the traffic flow information may include IP information of traffic generated by the service.

According to one embodiment, the traffic flow information may be specified in a TCLAS element included in the request frame 770.

According to one embodiment, when a plurality of TCLAS elements is included in the request frame 770, a TCLAS processing element may be included in the request frame 770.

According to one embodiment, the request frame 770 may include information about an AP around the electronic device 301 or 1001.

According to one embodiment, the information about the AP may include a BSSID or BSS color information.

According to one embodiment, the request frame 770 may include scheduling information for the service.

According to one embodiment, the scheduling information may include a service interval and a duration.

An operating method of an electronic device (e.g., the STA 301 of FIG. 4 or the electronic device 1001 of FIG. 10) in one embodiment may include identifying a service through the electronic device 301 or 1001. The method may include negotiating multi-AP coordination for the service. The method may include receiving traffic of the service through the multi-AP coordination.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to one embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms such as "1st," "2nd," or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," "circuit," or "circuitry." A module may be a single integral component, or a minimum unit or part thereof, adapted to perform one or more functions. For example, according to one embodiment, the module may be implemented in a form of an application-specific integrated circuit (ASIC).

Embodiments as set forth herein may be implemented as software (e.g., the program 1040) including one or more instructions that are stored in a storage medium (e.g., an internal memory 1036 or an external memory 1038) that is readable by a machine (e.g., the electronic device 1001). For example, a processor (e.g., the processor 1020) of the machine (e.g., the electronic device 1001) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method according to embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 301 or 1001, comprising:
at least one wireless communication circuit 1092 configured to transmit and receive a wireless signal;
at least one processor 1020 operatively connected with the at least one wireless communication circuit 1092; and
at least one memory 1030 configured to store instructions, wherein
the instructions are executed individually or collectivelyby the at least one processor 1020 to cause the electronic device 301 or 1001 to :
transmit, to an access point (AP) 401 associated with the electronic device 301 or 1001, a request frame 770 requesting multi-AP coordination for a service through the electronic device 301 or 1001;
receive a response frame to the request frame 770 through the AP 401; and
communicate traffic of the service through the multi-AP coordination.

2. The electronic device of claim 1, wherein the service is a real-time service.

3. The electronic device of any of claims 1 and 2, wherein the request frame 770 comprises information about the service.

4. The electronic device of any of claims 1 to 3, wherein the information about the service comprises Internet protocol (IP) information on traffic generated by the service.

5. The electronic device of any of claims 1 to 4, wherein the information about the service is specified in a traffic classification (TCLAS) element comprised in the request frame 770.

6. The electronic device of any of claims 1 to 5, wherein, when a plurality of TCLAS elements is comprised in the request frame, a TCLAS processing element is comprised in the request frame 770.

7. The electronic device of any of claims 1 to 6, wherein the request frame 770 comprises information about an AP around the electronic device 301 or 1001.

8. The electronic device of any of claims 1 to 7, wherein the information about the AP comprises a basic service set identifier (BSSID) or basic service set (BSS) color information.

9. The electronic device of any of claims 1 to 8, wherein the request frame 770 comprises scheduling information for the service.

10. The electronic device of any of claims 1 to 9, wherein the scheduling information comprises a service interval and a duration.

11. An electronic device 301 or 1001, comprising:
at least one wireless communication circuit 1092 configured to transmit and receive a wireless signal;
at least one processor 1020 operatively connected with the at least one wireless communication circuit 1092; and
at least one memory 1030 configured to store instructions, wherein
the instructions are executed individually or collectively by the at least one processor 1020 to cause the electronic device 301 or 1001 to:
transmit, to an access point (AP) 401 associated with the electronic device 301 or 1001, a request frame 770 requesting multi-AP coordination comprising traffic flow information of a service;
receive a response frame to the request frame 770 through the AP 401; and
receive traffic of the service through the multi-AP coordination.

12. The electronic device of claim 11, wherein the service is a real-time service.

13. The electronic device of any of claims 11 and 12, wherein the traffic flow information comprises Internet protocol (IP) information on traffic generated by the service.

14. The electronic device of any of claims 11 to 13, wherein the traffic flow information is specified in a traffic classification (TCLAS) element comprised in the request frame 770.

15. A method of operating an electronic device 301 or 1001, comprising:
Identifying a service through the electronic device 301 or 1001;
negotiating multi-AP coordination for the service; and
receiving traffic of the service through the multi-AP coordination.
